# EUROPEAN PATENT SPECIFICATION

(11) **EP 4 375 660 B1**
(45) Date of publication and mention of the grant of the patent: **29.07.2026**
(21) Application number: 23207121.7
(22) Date of filing: 31.10.2023
(51) Int. Cl.: G01N 30/96, G01N 30/64, G01N 30/88, G01N 30/74

(54) **IMPROVED CHROMATOGRAPHY BASELINE STABILITY**
VERBESSERTE CHROMATOGRAFIE-GRUNDLINIENSTABILITÄT
STABILITÉ DE LIGNE DE BASE DE CHROMATOGRAPHIE AMÉLIORÉE

(30) Priority: 14.11.2022 US 202218055064
(43) Date of publication of application: 29.05.2024
(60) Divisional application: 26181408.1
(73) Proprietor: Dionex Corporation, Sunnyvale, CA 94085 (US)
(72) Inventor: LIN, Rong, Irvine (US); LIU, Yan, Palo Alto (US)
(74) Representative: Boult Wade Tennant LLP

(56) References cited:
- EP-A2- 0 180 321
- US-A- 5 569 365
- US-A1- 2003 173 222
- US-A1- 2004 195 100
- US-A1- 2010 284 861
- US-A1- 2020 132 639

## Description

### BACKGROUND

Ion chromatography (IC) is a well-established analytical technique and for the past 40 years or so has been the preferred method for the determination of inorganic anions and small organic anions. IC is also used widely for the determination of inorganic cations, as well as carbohydrates and amino acids.

A suppressor may be used as one of the components in an IC system. The function of the suppressor is to reduce the background conductivity of the eluent and increase the conductivity of the analytes via the ion-exchange process, thus increasing the response in the subsequent conductivity detection. The most popular commercial suppressors are in the form of a three-channel sandwich-type design, in which the eluent channel carrying the sample is separated by two ion exchange membranes from the flanking regenerant channels carrying water stream. A flat plate electrode is placed in each of the regenerant channels. A constant current is passed between the two electrodes. The electrolysis of water in the regenerant channels produces hydrogen ions and hydroxide ions, used for the suppression of the eluent. The continuous supply of water in the regenerant channel is critical to the stability of the suppressor performance.

A salt converter may be used as one of the components in an IC system. The function of a salt converter is to convert the analyte ions which may be in acid or base form to the salt form. The conductivity signal of the salt form of a weak acid or weak base is more easily measured.

US2010/284861 A1 relates to a suppressor and ion chromatograph employing the same.

US 2003/173222 Al discloses an ion exchange device comprising a primary channel member including a primary channel, a first regenerant flow channel member including a first regenerant flow channel, a second regenerant flow channel member including a second regenerant flow channel, a first ion exchange membrane, a second ion exchange membrane, a first and a second electrode, and a back-pressure member.

### BRIEF SUMMARY

The present invention is defined in the appended claims. The invention relates to an ion exchange device comprising a primary channel member, a first regenerant flow channel member, a second regenerant flow channel member, a first ion exchange membrane, a second ion exchange membrane, and a first electrode and a second electrode.

The primary channel member includes a primary channel extending through the primary channel member. The primary channel member having a primary channel inlet port and a primary channel outlet port. The primary channel member is configured for the eluent to flow from the primary channel inlet port, through the primary channel, and then to the primary channel outlet port.

The first regenerant flow channel member includes a first regenerant flow channel extending through the first regenerant flow channel member. The first regenerant flow channel having a first regenerant flow inlet port and a first regenerant flow outlet port. The first regenerant flow channel member is configured for the first regenerant to flow from the first regenerant inlet port, through the first regenerant flow channel, and then to the first regenerant flow outlet port.

The second regenerant flow channel member includes a second regenerant flow channel extending through the second regenerant flow channel member. The second regenerant flow channel having a second regenerant flow inlet port and a second regenerant flow outlet port. The second regenerant flow channel member is configured for the second regenerant to flow from the second regenerant inlet port, through the second regenerant flow channel, and then to the second regenerant flow outlet port.

The first ion exchange membrane is configured to pass ions of only one charge, positive or negative, and of blocking bulk liquid flow. The first ion exchange membrane is disposed between the primary channel and the first regenerant flow channel. The second ion exchange membrane is configured to pass ions of only one charge, positive or negative, and of blocking bulk liquid flow. The second ion exchange membrane is disposed between the primary channel and the second regenerant flow channel.

The first electrode and the second electrode are disposed in the first regenerant channel and the second regenerant channel, respectively. The current from the electrodes causes ions to migrate into and out of the regenerant flow channels and the primary channel.

The first and second regenerant flow channels are configured to have consistent flow ranging from 0.001mL/min to 20 mL/min that changes by ± 5% or less over a period of 1 hour.

A sample may be analyzed with a chromatograph system. The method of analyzing comprises the steps of: Injecting a sample into a chromatography column of the chromatography system. Flowing a mobile phase into the chromatography column to separate the sample into one or more analytes that elute off the chromatography column at different times. Flowing the mobile phase from the chromatography column into an ion exchange device. The ion exchange device comprises: A primary channel, first and second regenerant flow channels, a first and second ion exchange membranes, and first and second electrodes. The exchange membranes are disposed between the primary channel and their respective regenerant flow channel, the electrodes are disposed in their respective regenerant channels. Flowing a regenerant phase through both regenerant flow channels at a consistent flow. Producing a voltage across the electrodes to pass ions from the sample or mobile phase across one of the ion exchange membranes into a regenerant flow channel and pass ions from a regenerant flow channel to the sample of mobile phase.

These and other objects and advantages shall be made apparent from the accompanying drawings and the description thereof.

### BRIEF DESCRIPTION OF THE FIGURES

The accompanying drawings, which are incorporated in and constitute a part of this specification, illustrate embodiments, and together with the general description given above, and the detailed description of the embodiments given below, serve to explain the principles of the present disclosure.
FIG. 1 is a diagram of an ion chromatography (IC) system.
FIG. 2 is an illustration of an ion exchange device.
FIG. 3 is a chromatograph of Example 1.
FIG. 4 is a chromatograph of Example 1.
FIG. 5 is a chromatograph of Example 2.

### DETAILED DESCRIPTION

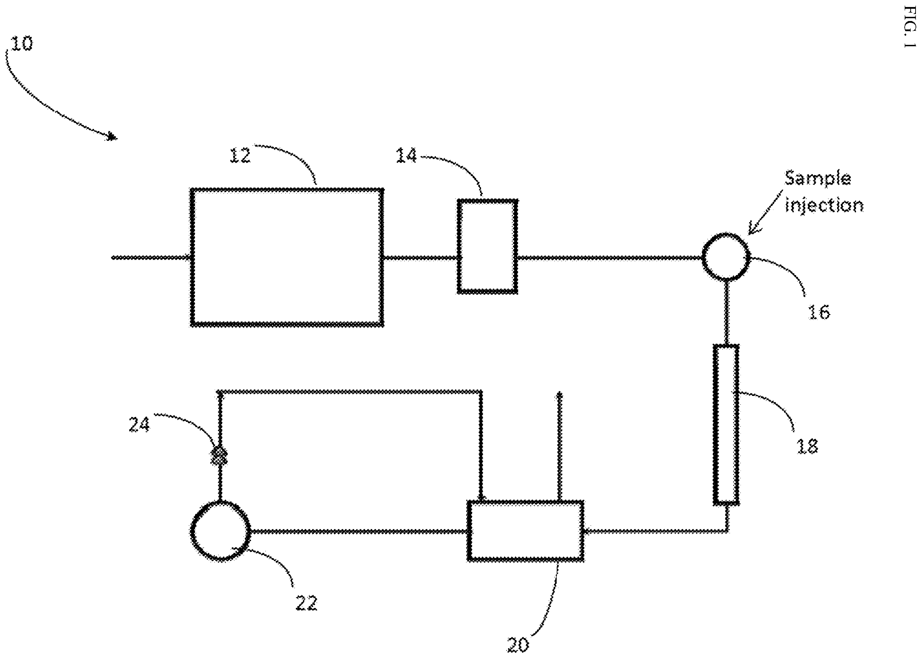

FIG. 1 illustrates an IC system. An eluent generator 14 may be of any suitable type, including those manufactured by Thermo Scientific (Sunnyvale, Calif., USA) such as EGC, EG40 and EG50. The eluent generator 14 may be used in combination with other components, such as continuously regenerated trap columns (CR-TC) or high pressure degas assembly manufactured by Dionex. The generated eluent is electrically conductive. With the presence of a CR-TC column or degas assembly, the generated eluent flows through the CR-TC column and into the high pressure degas assembly. Alternatively, the eluent may be prepared manually and drawn from an eluent reservoir (not shown) using a high-pressure pump 12. In this case there is no need for an eluent generator 14.

A suitable sample is introduced, for example, through a sample injection valve 16, and flows in the solution of the eluent into chromatographic separation means, typically in the form of a chromatographic column 18 which is packed with a chromatographic separation medium. The separation medium may be in the form of ion-exchange resin, monolith or a porous hydrophobic chromatographic resin with essentially no permanently attached ion-exchange sites.

The solution leaving the column 18 is directed to an ion exchange device 20, such as a suppressor, arranged in series with the column 18. The suppressor 20 suppresses the conductivity of the electrolyte of the eluent from column 18 but not the conductivity of the separated ions. The conductivity of the separated ions is usually enhanced in the suppression process. For instance, an exemplary anion Cl⁻ can be enhanced by converting it to the acid form HCl. After passing through the suppressor 20, the eluent is neutralized to produce its weakly ionized form. For instance, the exemplary eluent OH⁻ can be neutralized by reacting it with hydronium ion to form water. Typically, the suppressor 20 includes a primary channel through which an ionic species flows and a regenerant channel through which a regenerant flows. One will appreciate that the device may be used for IC suppression as well as sample pre-treatment and other uses, and as such, the primary channel may direct an eluent with an ionic species flow, or alternatively, may simply direct a liquid including an ionic species.

The suppressed eluent is then directed to detection means typically in the form of a conductivity cell 22 for detecting the resolved ionic species. In conductivity cell 22, the presence of ionic species produces an electrical signal proportional to the amount of ionic material. Such signal is typically directed from the cell 22 to a conductivity meter, thus permitting detection of the concentration of separated ionic species. The conductivity cell 22 may be electrically connected to devices such as a computer or data acquisition system for acquiring and processing the data or controlling the system.

After passing through the conductivity cell 22, the eluent may be redirected to the regenerant channel on the suppressor 20, thus providing a source of water to the suppressor 20 and eliminating a need for an external supply of water similar to what is described in U.S. Pat. No. 5,352,360. The suppressed eluent may be directed to waste or other devices to provide water or remove components such as gases. To prevent the eluent in the conductivity cell 22 from out-gassing, the system 10 may include a back pressure coil or back pressure coils 24, through which the eluent flows before redirecting to the regenerant channel on the suppressor 20. The back pressure coil or coils 24 help to prevent gases, generated during suppression, from out-gassing and prevent formation of bubbles in the conductivity cell 22, thus reducing the noises and improving the accuracy of the detection.

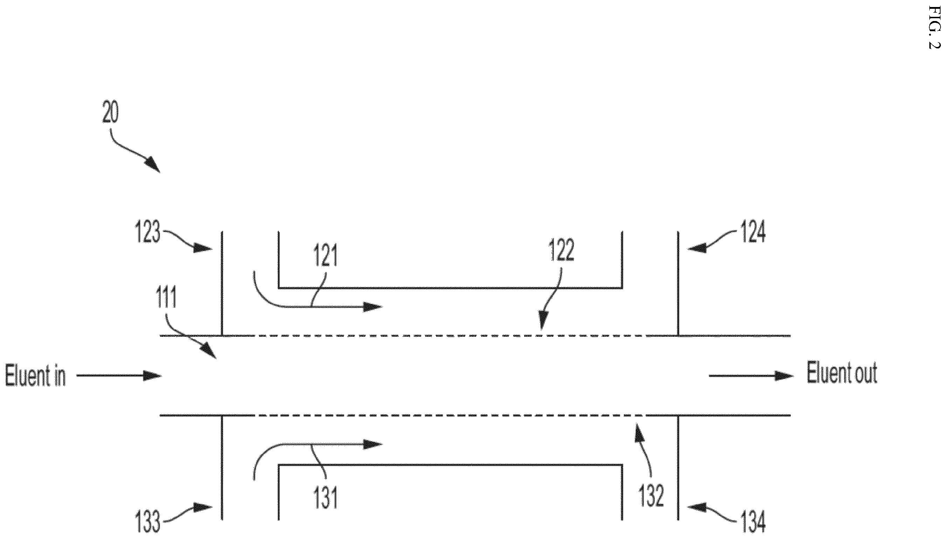

FIG. 2 illustrates an ion exchange device, a suppressor (20). The primary channel (111) is configured for the eluent to flow from the primary channel inlet port, through the primary channel, and then to the primary channel outlet port. A first regenerant flow channel (121) is configured for the first regenerant to flow from the first regenerant inlet port (123), through the first regenerant flow channel (121), and then to the first regenerant flow outlet port (124). A second regenerant flow channel (131) is configured for the second regenerant to flow from the second regenerant inlet port (133), through the second regenerant flow channel (131), and then to the second regenerant flow outlet port (134). A first ion exchange membrane (122) configured to pass ions of only one charge, positive or negative, and of blocking bulk liquid flow, the first ion exchange membrane (122) disposed between the primary channel (111) and the first regenerant flow channel (121). A second ion exchange membrane (132) configured to pass ions of only one charge, positive or negative, and of blocking bulk liquid flow, the second ion exchange membrane (132) disposed between the primary channel (111) and the second regenerant flow channel (131). A first electrode and a second electrode (not shown in FIG. 2) disposed in the first regenerant channel and the second regenerant channel, respectively.

An ion exchange device comprises a primary channel member, a first regenerant flow channel member, a second regenerant flow channel member, a first ion exchange membrane, a second ion exchange membrane, and a first electrode and a second electrode.

The primary channel member includes a primary channel extending through the primary channel member. The primary channel member having a primary channel inlet port and a primary channel outlet port. The primary channel member is configured for the eluent to flow from the primary channel inlet port, through the primary channel, and then to the primary channel outlet port.

The first regenerant flow channel member includes a first regenerant flow channel extending through the first regenerant flow channel member. The first regenerant flow channel having a first regenerant flow inlet port and a first regenerant flow outlet port. The first regenerant flow channel member is configured for the first regenerant to flow from the first regenerant inlet port, through the first regenerant flow channel, and then to the first regenerant flow outlet port.

The second regenerant flow channel member includes a second regenerant flow channel extending through the second regenerant flow channel member. The second regenerant flow channel having a second regenerant flow inlet port and a second regenerant flow outlet port. The second regenerant flow channel member is configured for the second regenerant to flow from the second regenerant inlet port, through the second regenerant flow channel, and then to the second regenerant flow outlet port.

The first ion exchange membrane is configured to pass ions of only one charge, positive or negative, and of blocking bulk liquid flow. The first ion exchange membrane is disposed between the primary channel and the first regenerant flow channel. The second ion exchange membrane is configured to pass ions of only one charge, positive or negative, and of blocking bulk liquid flow. The second ion exchange membrane is disposed between the primary channel and the second regenerant flow channel.

The first electrode and the second electrode are disposed in the first regenerant channel and the second regenerant channel, respectively. The current from the electrodes causes ions to migrate into and out of the regenerant flow channels and the primary channel.

The first and second regenerant flow channels are configured to have consistent flow during the operation, which can be less, equal, or greater than the eluent flow. The eluent flow rate typically ranges from 0.001 mL/min to 20 mL/min, such as 0.001 mL/min to 0.005 mL/min, 0.005 mL/min to 0.01 mL/min, 0.01 mL/min to 0.05 mL/min, 0.05 mL/min to 0.1 mL/min, 0.1 mL/min to 0.5 mL/min, 0.5 mL/min to 1 mL/min, 1 mL/min to 2 mL/min, 2 mL/min to 3 mL/min, 3 mL/min to 4 mL/min, 4 mL/min to 5 mL/min, 5 mL/min to 6 mL/min , 6 mL/min to 7 mL/min, 7 mL/min to 8 mL/min, 8 mL/min to 9 mL/min, 9 mL/min to 10 mL/min, 10 mL/min to 12 mL/min, 12 mL/min to 14 mL/min, 14 mL/min to 16 mL/min, 16 mL/min to 18 mL/min, 18 mL/min to 20 mL/min.

A consistent eluent flow rate is one that changes by ± 0.5% or less, such as ± 0.5% to ± 0.4%, ± 0.4% to ± 0.3%, ± 0.3% to ± 0.2%, and ± 0.2% to ± 0.1%. It is consistent over a period of 1 hour, 30 minutes, 15 minutes, 10 minutes, 5 minutes, 2 minutes, or 1 minute. A consistent eluent flow rate helps to achieve reproducible chromatographic separation of target analytes. A consistent regenerant flow rate is one that changes by ± 5% or less, such as ± 5% to ± 4%, ± 4% to ± 3%, ± 3% to ± 2%, and ± 2% to ± 1%. It is consistent over a period of 1 hour, 30 minutes, 15 minutes, 10 minutes, 5 minutes, 2 minutes, or 1 minute. A consistent regenerant flow rate helps to provide improved baseline stability.

An ion exchange device exchanges ions of the analyte, eluent, or both. For example, the salt form of an analyte may be converted to the free acid or the converse. Another example is that the eluent may contain a strong base, such as NaOH, which is converted to H₂O by exchanging Na⁺ ions for H⁺ ions. A suppressor is one example of an ion exchange device. It typically enhances the conductivity of the analyte to make it easier to detect with a conductivity meter, while also reducing the conductivity of the eluent. A salt converter is one example of an ion exchange device. It may be used to exchange ions with both the eluent and the analyte, but then re-exchange counter ions with the analyte to convert it back to its salt form. For weak acid anion or a weak base cation, converting it back to its original salt form enhances the conductivity signal measured.

A regenerant is the source of the ions to be exchanged and the destination of the ions removed. The exchange ions may be formed from water by electrolysis. The ions migrate from one regenerant flow channel to the primary channel and the removed ions migrate from the primary channel to the other regenerant channel.

In some embodiments, the ion exchange device is configured so the first and second ion exchange members pass ions of opposite charges.

In some embodiments, the first regenerant flow outlet port is in fluidic connection with the second regenerant flow inlet port. In some embodiments, the primary channel outlet port is in fluidic connection with the first regenerant flow inlet port.

The ion exchange device according to the invention comprises a back-pressure member including a flow splitter and a first and second back pressure tubing. The flow splitter has a flow splitter inlet port and a first and second flow splitter outlet ports. The flow splitter inlet port is in fluidic connection with both the first and second flow splitter outlet ports. The first flow splitter outlet port is in fluidic connection with the first back pressure tubing which is in fluidic connection with the first regenerant flow inlet port. The second flow splitter outlet port is in fluidic connection with the second back pressure tubing which is in fluidic connection with the second regenerant flow inlet port. In some embodiments, the flow rate in the first regenerant flow channel is different from the flow in the second regenerant flow channel. In some embodiments, the flow rate in the first regenerant flow channel is the same as the flow in the second regenerant flow channel.

The electrodes are used to migrate the ions from one regenerant flow channel to the primary channel and from the primary channel to the other regenerant flow channel under the applied electrical field. In some embodiments, the first electrode is a cathode.

A sample may be analyzed with a chromatograph system. The method of analyzing, which does not form part of the present invention, comprises the steps of: Injecting a sample into a chromatography column of the chromatography system. Flowing a mobile phase into the chromatography column to separate the sample into one or more analytes that elute off the chromatography column at different times. Flowing the mobile phase from the chromatography column into an ion exchange device. The ion exchange device comprises: A primary channel, first and second regenerant flow channels, a first and second ion exchange membranes, and first and second electrodes. The exchange membranes are disposed between the primary channel and their respective regenerant flow channel, the electrodes are disposed in their respective regenerant channels. Flowing a regenerant phase through both regenerant flow channels at a consistent flow. Applying an electrical voltage across the electrodes to electrolyze water and pass ions from the sample or mobile phase across one of the ion exchange membranes into a regenerant flow channel and pass ions from a regenerant flow channel to the sample of mobile phase.

In some embodiments, the sample comprises an amine hydroxide or ammonium and the amine hydroxide or ammonium is converted to a salt form in the ion exchange device. In some embodiments, the mobile phase comprises acid and is converted into water in the ion exchange device. In some embodiments, the mobile phase comprises base and is converted into water in the ion exchange device. In some embodiments, the sample comprises a weak acid and is converted to a salt form in the ion exchange device.

In some embodiments, the method (which does not form part of the present invention) further comprises flowing the sample from the ion exchange device to a detector.

In the present disclosure the singular forms "a", "an" and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

The modifier "about" should be considered as disclosing the range defined by the absolute values of the two endpoints. For example, the expression "from about 2 to about 4" also discloses the range "from 2 to 4." When used to modify a single number, the term "about" may refer to plus or minus 10% of the indicated number and includes the indicated number. For example, "about 10% " may indicate a range of 9% to 11%, and "about 1 " means from 0.9 to 1.1.

When a list is presented, unless stated otherwise, it is to be understood that each individual element of that list and every combination of that list is to be interpreted as a separate embodiment. For example, a list of embodiments presented as "A, B, or C" is to be interpreted as including the embodiments, "A," "B," "C," "A or B," "A or C," "B or C," or "A, B, or C."

Where present, all ranges are inclusive and combinable. That is, references to values stated in ranges include every value within that range. For example, a range defined as from 400 to 450 ppm includes 400 ppm and 450 ppm as independent embodiments. Ranges of 400 to 450 ppm and 450 to 500 ppm may be combined to be a range of 400 to 500 ppm.

It is to be appreciated that certain features of the invention which are, for clarity, described herein in the context of separate embodiments, may also be provided in combination in a single embodiment. That is, unless obviously incompatible or excluded, each individual embodiment is deemed to be combinable with any other embodiment(s) and such a combination is considered to be another embodiment. Conversely, various features of the invention that are, for brevity, described in the context of a single embodiment, may also be provided separately or in any sub-combination. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation. Finally, while an embodiment may be described as part of a series of steps or part of a more general structure, each said step may also be considered an independent embodiment in itself.

While the present disclosure has illustrated by description several embodiments and while the illustrative embodiments have been described in considerable detail, it is not the intention of the applicant to restrict or in any way limit the scope of the appended claims to such detail. Additional advantages and modifications may readily appear to those skilled in the art. Furthermore, features from separate lists can be combined; and features from the examples can be generalized to the whole disclosure. The invention is defined in the appended claims.

### EXAMPLES

### Example 1

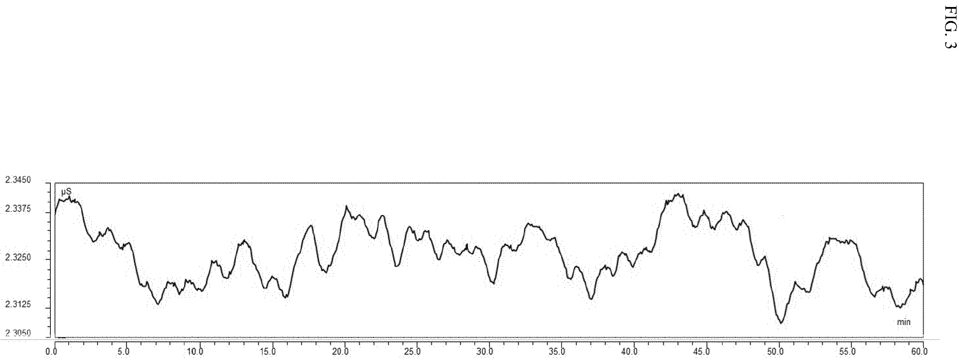

A 2mm Thermo Scientific Dionex SC-CERS 500 unit was used as a salt converter for cation analysis in conjunction with an IonPac CS12A (2x250 mm) column from Thermo Fisher Scientific. The eluent used was 20 mM MSA, which was generated by an eluent generator module. The flow rate was 0.25 mL/min. The current applied to the SC-CERS 500 unit was 15 mA. The average baseline noise is 2.86 nS/cm as shown in FIG. 3.

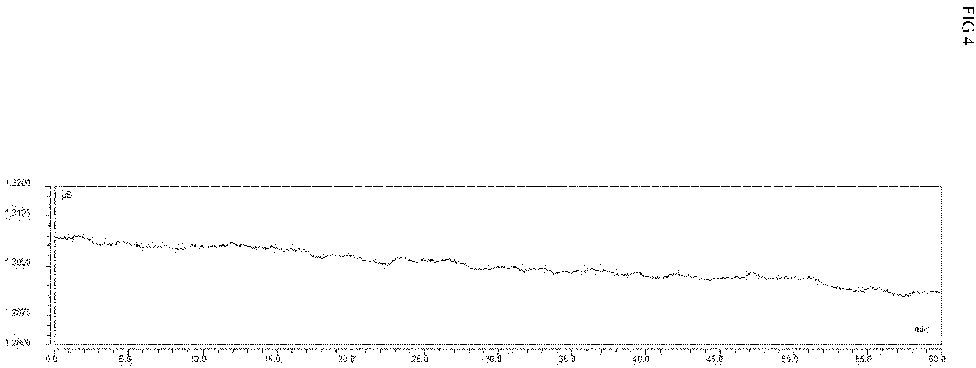

In one embodiment, the fluid connection of SC-CERS 500 suppressor was modified. The inlet of the first regenerant channel was fluidically and directly connected to the outlet port of the conductivity detector cell. The outlet port of the first regenerant channel was fluidically connected to the inlet of the second regenerant channel. The outlet of the second regenerant channel was connected to the waste. The average baseline noise is 0.76 nS/cm as shown in FIG. 4.

### Example 2

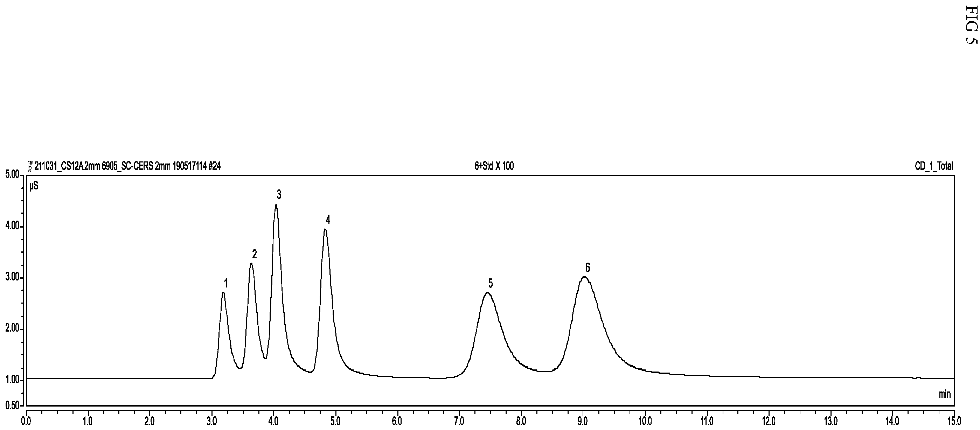

A 2-mm SC-CERS 500 suppressor was modified fluidically as described in Example 1 as a salt converter for cation analysis in conjunction with an IonPac CS12A (2x250 mm) column from Thermo Fisher Scientific. The eluent used was 20 mM MSA, which was generated by an eluent generator module. The flow rate was 0.25 mL/min. The applied current was 15 mA. The separation of lithium, sodium, ammonium, potassium, magnesium, and calcium is shown in FIG. 5. Peak 1: lithium; Peak 2: sodium; Peak 3: ammonium; Peak 4: potassium; Peak 5: magnesium; Peak 6: calcium.

## Claims

1. An ion exchange device (20) comprising:
a primary channel member including a primary channel (111) extending through the primary channel member, the primary channel member having a primary channel inlet port and a primary channel outlet port, wherein the primary channel member is configured for the eluent to flow from the primary channel inlet port, through the primary channel (111), and then to the primary channel outlet port;
a first regenerant flow channel member including a first regenerant flow channel (121) extending through the first regenerant flow channel member, the first regenerant flow channel (121) having a first regenerant flow inlet port (123) and a first regenerant flow outlet port (124), wherein the first regenerant flow channel member is configured for the first regenerant to flow from the first regenerant inlet port (123), through the first regenerant flow channel (121), and then to the first regenerant flow outlet port (124);
a second regenerant flow channel member including a second regenerant flow channel (131) extending through the second regenerant flow channel member, the second regenerant flow channel (131) having a second regenerant flow inlet port (133) and a second regenerant flow outlet port (134), wherein the second regenerant flow channel member is configured for the second regenerant to flow from the second regenerant inlet port (133), through the second regenerant flow channel (131), and then to the second regenerant flow outlet port (134);
a first ion exchange membrane (122) configured to pass ions of only one charge, positive or negative, and of blocking bulk liquid flow, the first ion exchange membrane disposed between the primary channel (111) and the first regenerant flow channel (121);
a second ion exchange membrane (132) configured to pass ions of only one charge, positive or negative, and of blocking bulk liquid flow, the second ion exchange membrane (132) disposed between the primary channel (111) and the second regenerant flow channel (131);
a first electrode and a second electrode disposed in the first regenerant channel (121) and the second regenerant channel (131), respectively;
a back-pressure member including a flow splitter and first and second back pressure tubing;
wherein the flow splitter has a flow splitter inlet port and first and second flow splitter outlet ports, wherein the flow splitter inlet port is in fluidic connection with both the first and second flow splitter outlet ports;
wherein the first flow splitter outlet port is in fluidic connection with the first back pressure tubing which is in fluidic connection with the first regenerant flow inlet port, and
wherein the second flow splitter outlet port is in fluidic connection with the second back pressure tubing which is in fluidic connection with the second regenerant flow inlet port;
wherein the first and second regenerant flow channels (121, 131) are configured to have a consistent regenerant flow rate ranging from 0.001mL/min to 20 mL/min that changes by ± 5% or less over a period of 1 hour.

2. The ion exchange device (20) of claim 1, wherein the first and second ion exchange membranes (122, 132) are configured to pass ions of opposite charges.

3. The ion exchange device (20) of claim 1, wherein the device (20) is configured so the flow rate in the first regenerant flow channel (121) is different from the flow rate in the second regenerant flow channel (131).

4. The ion exchange device (20) of claim 1, wherein the device (20) is configured so the flow rate in the first regenerant flow channel (121) is the same as the flow rate in the second regenerant flow channel (131).

5. The ion exchange device (20) of claim 1, wherein the ion exchange device (20) is a salt converter and preferably, the length of each of the first and second electrodes is less than the length of the first and second regenerant channels (121,131), respectively.

6. The ion exchange device (20) of claim 5, wherein the device (20) is configured so the flow of the eluent in the primary channel (111) is in the same direction as the flow of the first and second regenerants (121,131).

7. The ion exchange device (20) of claim 1, wherein the ion exchange device (20) is a suppressor.

8. The ion exchange device (20) of claim 7, wherein the device (20) is configured so the flow of the eluent in the primary channel (111) is in the opposite direction as the flow of the first and second regenerants.

## Patentansprüche

1. Ionenaustauschvorrichtung (20), umfassend:
ein primäres Kanalelement, das einen primären Kanal (111) einschließt, der sich durch das primäre Kanalelement erstreckt, wobei das primäre Kanalelement eine primäre Kanaleinlassöffnung und eine primäre Kanalauslassöffnung aufweist, wobei das primäre Kanalelement so konfiguriert ist, dass der Eluent von der primären Kanaleinlassöffnung durch den primären Kanal (111) und dann zu der primären Kanalauslassöffnung fließt;
ein erstes Regeneriermittelflusskanalelement, das einen ersten Regeneriermittelflusskanal (121) einschließt, der sich durch das erste Regeneriermittelflusskanalelement erstreckt, wobei der erste Regeneriermittelflusskanal (121) eine erste Regeneriermittelflusseinlassöffnung (123) und eine erste Regeneriermittelflussauslassöffnung (124) aufweist, wobei das erste Regeneriermittelflusskanalelement so konfiguriert ist, dass das erste Regeneriermittel von der ersten Regeneriermitteleinlassöffnung (123) durch den ersten Regeneriermittelflusskanal (121) und dann zu der ersten Regeneriermittelflussauslassöffnung (124) fließt;
ein zweites Regeneriermittelflusskanalelement, das einen zweiten Regeneriermittelflusskanal (131) einschließt, der sich durch das zweite Regeneriermittelflusskanalelement erstreckt, wobei der zweite Regeneriermittelflusskanal (131) eine zweite Regeneriermittelflusseinlassöffnung (133) und eine zweite Regeneriermittelflussauslassöffnung (134) aufweist, wobei das zweite Regeneriermittelflusskanalelement so konfiguriert ist, dass das zweite Regeneriermittel von der zweiten Regeneriermitteleinlassöffnung (133) durch den zweiten Regeneriermittelflusskanal (131) und dann zu der zweiten Regeneriermittelflussauslassöffnung (134) fließt;
eine erste Ionenaustauschmembran (122), die konfiguriert ist, um Ionen mit nur einer Ladung, positiv oder negativ, durchzulassen und den Massenflüssigkeitsfluss zu blockieren, wobei die erste Ionenaustauschmembran zwischen dem primären Kanal (111) und dem ersten Regeneriermittelflusskanal (121) angeordnet ist;
eine zweite lonenaustauschmembran (132), die konfiguriert ist, um Ionen mit nur einer Ladung, positiv oder negativ, durchzulassen und den Massenflüssigkeitsfluss zu blockieren, wobei die zweite Ionenaustauschmembran (132) zwischen dem primären Kanal (111) und dem zweiten Regeneriermittelflusskanal (131) angeordnet ist;
eine erste Elektrode und eine zweite Elektrode, die in dem ersten Regeneriermittelkanal (121) beziehungsweise dem zweiten Regeneriermittelkanal (131) angeordnet sind;
ein Gegendruckelement, das einen Flussteiler und eine erste und eine zweite Gegendruckleitung einschließt;
wobei der Flussteiler eine Flussteilereinlassöffnung und eine erste und eine zweite Flussteilerauslassöffnung aufweist, wobei die Flussteilereinlassöffnung in fluidischer Verbindung sowohl mit der ersten als auch mit der zweiten Flussteilerauslassöffnung steht;
wobei die erste Flussteilerauslassöffnung in fluidischer Verbindung mit der ersten Gegendruckleitung steht, die in fluidischer Verbindung mit der ersten Regeneriermittelflusseinlassöffnung steht, und
wobei die zweite Flussteilerauslassöffnung in fluidischer Verbindung mit der zweiten Gegendruckleitung steht, die in fluidischer Verbindung mit der zweiten Regeneriermittelflusseinlassöffnung steht;
wobei der erste und der zweite Regeneriermittelflusskanal (121, 131) konfiguriert sind, um eine gleichbleibende Regeneriermittelflussgeschwindigkeit in einem Bereich von 0,001 mL/min bis 20 mL/min aufzuweisen, die sich über einen Zeitraum von 1 Stunde um ± 5 % oder weniger ändert.

2. Ionenaustauschvorrichtung (20) nach Anspruch 1, wobei die erste und die zweite lonenaustauschmembran (122, 132) konfiguriert sind, um Ionen entgegengesetzter Ladungen durchzulassen.

3. Ionenaustauschvorrichtung (20) nach Anspruch 1, wobei die Vorrichtung (20) so konfiguriert ist, dass die Flussgeschwindigkeit in dem ersten Regeneriermittelflusskanal (121) von der Flussgeschwindigkeit in dem zweiten Regeneriermittelflusskanal (131) verschieden ist.

4. Ionenaustauschvorrichtung (20) nach Anspruch 1, wobei die Vorrichtung (20) so konfiguriert ist, dass die Flussgeschwindigkeit in dem ersten Regeneriermittelflusskanal (121) gleich der Flussgeschwindigkeit in dem zweiten Regeneriermittelflusskanal (131) ist.

5. Ionenaustauschvorrichtung (20) nach Anspruch 1, wobei die Ionenaustauschvorrichtung (20) ein Salzkonverter ist und vorzugsweise die Länge jeder der ersten und der zweiten Elektrode kleiner als die Länge der ersten beziehungsweise der zweiten Regeneriermittelkanäle (121, 131) ist.

6. Ionenaustauschvorrichtung (20) nach Anspruch 5, wobei die Vorrichtung (20) so konfiguriert ist, dass der Fluss des Eluenten in dem primären Kanal (111) in der gleichen Richtung wie der Fluss des ersten und des zweiten Regeneriermittels (121, 131) verläuft.

7. Ionenaustauschvorrichtung (20) nach Anspruch 1, wobei die Ionenaustauschvorrichtung (20) ein Suppressor ist.

8. Ionenaustauschvorrichtung (20) nach Anspruch 7, wobei die Vorrichtung (20) so konfiguriert ist, dass der Fluss des Eluenten in dem primären Kanal (111) in der entgegengesetzten Richtung wie der Fluss des ersten und des zweiten Regeneriermittels verläuft.

## Revendications

1. Dispositif d'échange d'ions (20) comprenant :
un élément de canal primaire comportant un canal primaire (111) s'étendant à travers l'élément de canal primaire, l'élément de canal primaire ayant un orifice d'entrée de canal primaire et un orifice de sortie de canal primaire, dans lequel l'élément de canal primaire est configuré pour que l'éluant s'écoule depuis l'orifice d'entrée de canal primaire, à travers le canal primaire (111), puis vers l'orifice de sortie de canal primaire ;
un élément de canal d'écoulement de premier régénérant comportant un canal d'écoulement de premier régénérant (121) s'étendant à travers l'élément de canal d'écoulement de premier régénérant, le canal d'écoulement de premier régénérant (121) ayant un orifice d'entrée d'écoulement de premier régénérant (123) et un orifice de sortie d'écoulement de premier régénérant (124), dans lequel l'élément de canal d'écoulement de premier régénérant est conçu pour que le premier régénérant s'écoule depuis l'orifice d'entrée de premier régénérant (123), à travers le canal d'écoulement de premier régénérant (121), puis vers l'orifice de sortie d'écoulement de premier régénérant (124) ;
un élément de canal d'écoulement de second régénérant comportant un canal d'écoulement de second régénérant (131) s'étendant à travers l'élément de canal d'écoulement de second régénérant, le canal d'écoulement de second régénérant (131) ayant un orifice d'entrée d'écoulement de second régénérant (133) et un orifice de sortie d'écoulement de second régénérant (134), dans lequel l'élément de canal d'écoulement de second régénérant est conçu pour que le second régénérant s'écoule depuis l'orifice d'entrée de second régénérant (133), à travers le canal d'écoulement de second régénérant (131), puis vers l'orifice de sortie d'écoulement de second régénérant (134) ;
une première membrane échangeuse d'ions (122) conçue pour laisser passer des ions d'une seule charge, positive ou négative, et pour bloquer un écoulement de liquide en masse, la première membrane échangeuse d'ions étant disposée entre le canal primaire (111) et le canal d'écoulement de premier régénérant (121) ;
une seconde membrane échangeuse d'ions (132) conçue pour laisser passer des ions d'une seule charge, positive ou négative, et pour bloquer un écoulement de liquide en masse, la seconde membrane échangeuse d'ions (132) étant disposée entre le canal primaire (111) et le canal d'écoulement de second régénérant (131) ;
une première électrode et une seconde électrode disposées respectivement dans le canal de premier régénérant (121) et le canal de second régénérant (131) ;
un élément de contre-pression comportant un séparateur d'écoulement et des première et seconde tubulures de contre-pression ;
dans lequel le séparateur d'écoulement a un orifice d'entrée de séparateur d'écoulement et des premier et second orifices de sortie de séparateur d'écoulement, dans lequel l'orifice d'entrée de séparateur d'écoulement est en raccordement fluidique avec à la fois les premier et second orifices de sortie de séparateur d'écoulement ;
dans lequel le premier orifice de sortie de séparateur d'écoulement est en raccordement fluidique avec la première tubulure de contre-pression qui est en raccordement fluidique avec l'orifice d'entrée d'écoulement de premier régénérant, et
dans lequel le second orifice de sortie de séparateur d'écoulement est en raccordement fluidique avec la seconde tubulure de contre-pression qui est en raccordement fluidique avec l'orifice d'entrée d'écoulement de second régénérant ;
dans lequel les canaux d'écoulement de premier et second régénérants (121, 131) sont conçus pour avoir un débit constant de régénérant compris dans une plage allant de 0,001 mL/min à 20 mL/min qui change de ± 5 % ou moins sur une période de 1 heure.

2. Dispositif d'échange d'ions (20) selon la revendication 1, dans lequel les première et seconde membranes échangeuses d'ions (122, 132) sont conçues pour faire passer des ions de charges opposées.

3. Dispositif d'échange d'ions (20) selon la revendication 1, dans lequel le dispositif (20) est configuré de sorte que le débit dans le canal d'écoulement de premier régénérant (121) est différent du débit dans le canal d'écoulement de second régénérant (131).

4. Dispositif d'échange d'ions (20) selon la revendication 1, dans lequel le dispositif (20) est configuré de sorte que le débit dans le canal d'écoulement de premier régénérant (121) est le même que le débit dans le canal d'écoulement de second régénérant (131).

5. Dispositif d'échange d'ions (20) selon la revendication 1, dans lequel le dispositif d'échange d'ions (20) est un convertisseur de sel et, de préférence, la longueur de chacune des première et seconde électrodes est respectivement inférieure à la longueur des canaux de premier et second régénérants (121, 131).

6. Dispositif d'échange d'ions (20) selon la revendication 5, dans lequel le dispositif (20) est configuré de sorte que l'écoulement de l'éluant dans le canal primaire (111) se fait dans le même sens que l'écoulement des premier et second régénérants (121, 131).

7. Dispositif d'échange d'ions (20) selon la revendication 1, dans lequel le dispositif d'échange d'ions (20) est un suppresseur.

8. Dispositif d'échange d'ions (20) selon la revendication 7, dans lequel le dispositif (20) est configuré de sorte que l'écoulement de l'éluant dans le canal primaire (111) se fait dans le sens opposé à l'écoulement des premier et second régénérants.
